# EUROPÄISCHE PATENTSCHRIFT

(11) **EP 1 309 470 B1**
(45) Veröffentlichungstag und Bekanntmachung des Hinweises auf die Patenterteilung: **08.11.2006**
(21) Anmeldenummer: 01974116.4
(22) Anmeldetag: 06.08.2001
(51) Int. Cl.: B60R 7/02

(54) **SYSTEM ZUR UNTERBRINGUNG VON LADEGUT IN EINEM FAHRZEUG**
SYSTEM FOR STORING A LOAD IN A VEHICLE
SYSTEME POUR LOGER UNE CHARGE DANS UN VEHICULE

(30) Priorität: 16.08.2000 DE 20014050 U
(43) Veröffentlichungstag der Anmeldung: 14.05.2003
(73) Patentinhaber: Johnson Controls GmbH, 51399 Burscheid (DE)
(72) Erfinder: CARO, Hans, Jürgen, 42252 Wuppertal (DE); DEISSMANN, Bernd, 42899 Remscheid (DE); FISCHER, Siggi, 51371 Leverkusen (DE); HANDKE, Dieter, 42929 Wermelskirchen (DE); HOGE, Ralf, 42477 Radevormwald (DE); SCHULZ, Christian, 42799 Leichlingen (DE); MÜLLER, Frank, 50672 Köln (DE)
(74) Vertreter: Kutzenberger, Helga
(86) Internationale Anmeldenummer: PCT/EP2001/009058
(87) Internationale Veröffentlichungsnummer: WO 2002/014107

(56) Entgegenhaltungen:
- DE-A- 3 629 283
- DE-A- 3 923 690
- DE-A- 19 820 517
- DE-A- 19 837 685
- DE-U- 7 112 747
- FR-A- 2 742 394
- US-A- 2 953 287
- US-A- 5 340 183
- US-A- 5 492 257
- PATENT ABSTRACTS OF JAPAN vol. 1996, no. 04, 30. April 1996 (1996-04-30) & JP 07 315130 A (KANTO AUTO WORKS LTD), 5. Dezember 1995 (1995-12-05)

## Beschreibung

Die Vorliegende Erfindung betrifft ein System zur (fahrtgesicherten) Unterbringung von Ladegut innerhalb eines Laderaumes eines Fahrzeuges.

Solche Systeme sind in verschiedenen Ausführungen z.B aus der JP 07315130A oder der DE 198 20 517 bekannt. Beispielsweise wird innerhalb eines Laderaumes ein Aufnahmebehälter befestigt, der auch nach Art einer Klappbox flach zusammengelegt werden kann. In diesem flach zusammengelegten Nichtgebrauchszustand entsteht aber zum benachbarten Laderaumboden hin aufgrund der unvermeidbaren Dicke des zusammengelegten "Behälterteilpaketes" eine mehr oder weniger hohe Stufe, die vor allem beim Laden größerer Gegenstände, wie liegender Koffer, sehr störend ist, weil sie ein flaches, kippsicheres Liegen des jeweiligen Gegenstandes auf dem Ladeboden verhindert.

Der vorliegenden Erfindung liegt die Aufgabe zugrunde, ein System der genannten Art zu schaffen, mit dem nahezu beliebiges Ladegut stets optimal und sicher sowie mit hohem Anwendungskomfort im jeweiligen Laderaum untergebracht werden kann und gut zugänglich ist.

Erfindungsgemäß wird dies durch eine neuartige, im Laderaum des Fahrzeugs befestigte bzw. befestigbare Trägereinrichtung für Ladegut-Aufnahmemittel erreicht indem die Trägereinrichtung aus einer auf einem Laderaumboden liegenden Gebrauchsposition (in der die mit der Trägereinrichtung verbundenen bzw. verbindbaren Ladegut-Aufnahmemittel in einem für Ladegut aufnahmebereiten Zustand sind) nach Entfernen und/oder flachem Zusammenlegen der Ladegut-Aufnahmemittel, um eine in der Nähe des Laderaumbodens zu diesem etwa parallel verlaufende Schwenkachse in eine etwa parallel zu sowie in der Nähe einer den Laderaum begrenzenden Fahrzeugwandung (Schottwandung) liegende und dadurch den Fahrzeugboden freigebende Nichtgebrauchsposition verschwenkbar (d.h. hochlklappbar) ist Vorzugsweise ist dabei die Trägereinrichtung derart ausgebildet und innerhalb des Laderaums derart anzuordnen, dass die Schwenkachse quer, insbesondere rechtwinklig, zu einer Fahrzeug-Längsachse und in der Nähe einer den Laderaum von einem Fahrgastraum trennenden und einer Laderaumöffnung gegenüberliegenden Fahrzeugwandung verläuft. Im Falle eines Heck-Laderaumes handelt es sich somit um eine in Fahrtrichtung vordere Fahrzeugwandung, die in aller Regel schräg nach oben und in Richtung der Laderaumöffnung geneigt verläuft.

Durch das erfindungsgemäße System wird eine außerordentlich variable und komfortable Nutzung des Laderaumes möglich. Bestimmtes, z.B. kleineres Ladegut, kann durch Nutzung der Ladegut-Aufnahmemittel, insbesondere in Form eines klappboxartigen Aufnahmebehälters, in der Gebrauchsposition der Trägereinrichtung untergebracht werden. Die Unterbringung, d.h. das Beladen, kann dabei erfindungsgemäß erleichtert werden, wenn die Trägereinrichtung so ausgebildet ist, dass die Ladegut-Aufnahmemittel aus der Gebrauchsposition (in der sie in einem für die jeweilige Ladung aufnahmebereiten Zustand möglichst nahe an der den Laderaum begrenzenden Fahrzeugwandung stehen) von der Fahrzeugwandung weg in Richtung zur Laderaumöffnung hin in eine Ladeposition bewegbar sind. Die dann sehr einfach und komfortabel zu beladene Anordnung kann dann wieder bis nahe an die gegenüberliegende Fahrzeugwandung in die Gebrauchsposition gebracht werden, so dass dann zusätzlich der Raum zwischen den über die erfindungsgemäße Trägereinrichtung gehaltenen und geführten Aufnahmemitteln (z.B. Behäfter) und der Laderaumöffnung für weiteres Ladegut, zB. stehende Taschen, Getränkekästen usw. genutzt werden kann. Zur flach liegenden Unterbringung von größeren Teilen, wie liegenden Koffern, kann vorteilhafterweise die gesamte Trägereinrichtung - entweder nach Demontage der eigentlichen ladegut-Aufnahmemittel oder vorzugsweise in einem flach zusammengelegten Zustand der Aufnahmemittel gemeinsam mit letzteren - um die Schwenkachse nach oben gegen die den Laderaum begrenzende Fahrzeugwandung geschwenkt werden, wodurch folglich fast der gesamte Laderaumboden vollständig freigegeben wird, ohne dass wesentliche Systemteile auf dem Boden verbleiben würden. Es wird zur Unterbringung der erfindungsgemäßen Systemteile lediglich ein kleiner Raum direkt benachbart der den Laderaum begrenzenden Fahrzeugwandung benötigt. Gerade dieser Raum stellt aber erfahrungsgemäß - vor allem wegen des oben erwähnten schrägen Verlaufs der Fahrzeug-Schottwandung - ohnehin den am wenigsten genutzten Laderaumbereich dar, so dass die Erfindung praktisch keine Einschränkung der Laderaumnutzung bedeutet, sondern vielmehr zu einer besseren Ausnutzung des Laderaums führt.

Die erfindungsgemäße Trägereinrichtung bildet praktisch eine universell einsetzbare "Plattform" zur Halterung nahezu beliebiger Ladegut-Aufnahmemittel. Zudem kann die Trägereinrichtung auch universell in unterschiedlichen Fahrzeugen eingesetzt werden, wozu lediglich besondere Adapterteile zur fahrzeugspezifisch angepaßten Befestigung der Trägereinrichtung und ggf. weiterer zugehöriger Funktionsteile innerhalb des Laderaums des jeweiligen Fahrzeugs benötigt werden.

Weitere erfindungsgemäße vorteilhafte Ausgestattungsmetkmale der Erfindung sind in den Unteransprüchen sowie der folgenden Beschreibung enthalten.

Anhand der Zeichnung soll im folgenden die Erfindung beispielhaft näher erläutert werden. Dabei zeigen :
- Fig. 1: eine schematische Seitenansicht im Bereich eines Fahrzeug-Laderaums mit dem erfindungsgemäßen System mit gleichzeitiger Darstellung verschiedener Nutzungspositionen,
- Fig. 2: eine Perspektivdarstellung der erfindungsgemäßen Trägereinrichtung,
- Fig. 3: eine Teil-Frontansicht (Pfeilrichtung III gem. Fig. 2, wobei allerdings bestimmte Teile weggelassen wurden),
- Fig. 4: eine Seitenansicht der Trägereinrichtung in Pfeilrichtung IV gem. Fig. 2 mit Darstellung von zwei unterschiedlichen Schwenkstellungen,
- Fig. 5: eine Draufsicht in Pfeilrichtung V gem. Fig. 4,
- Fig. 6: eine schematisch "transparent" dargestellte Seitenansicht in Pfeilrichtung VI gem. Fig. 2,
- Fig. 7: einen Schnitt in der Ebene VII-VII gem. Fig. 4 bzw. 5 und
- Fig. 8: eine perspektivische Einsicht in einen Fahrzeug-Laderaum mit einem erfindungsgemäßen System in einer Ladeposition.

In den verschiedenen Figuren der Zeichnung sind gleiche Teile stets mit den gleichen Bezugszeichen versehen und brauchen daher in der Regel auch jeweils nur einmal beschrieben zu werden.

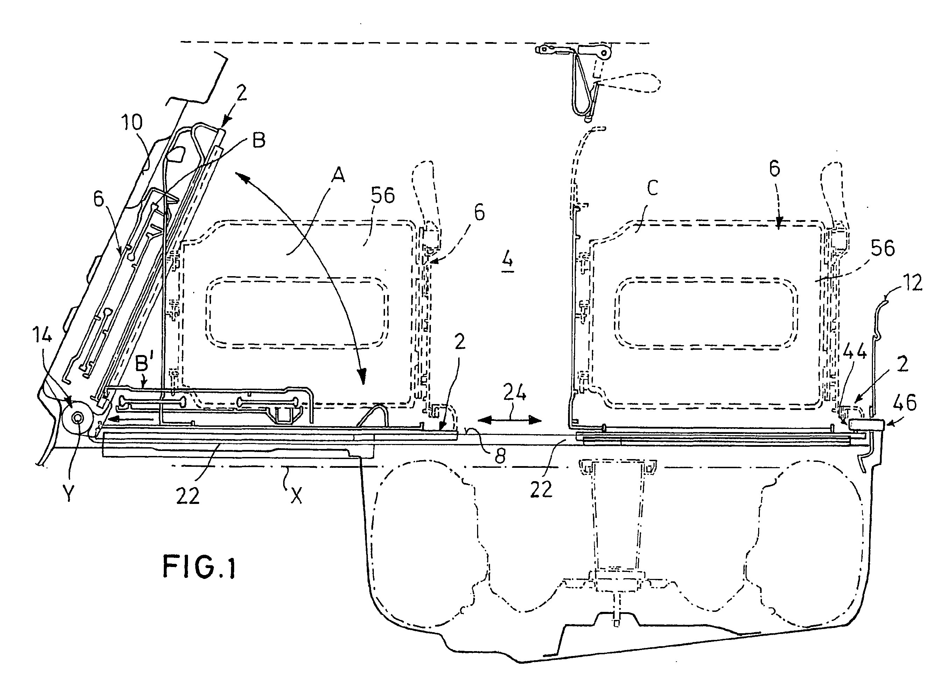

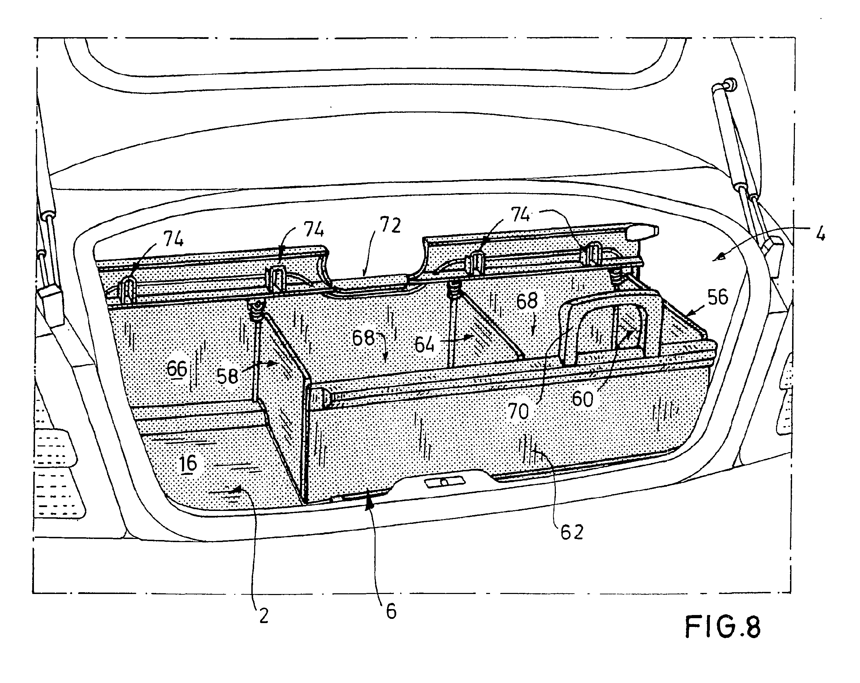

Das erfindungsgemäße System weist als wesentliche System-Baugruppe eine Trägereinrichtung 2 auf. Diese Trägereinrichtung 2 ist einerseits in einem Laderaum 4 (vgl. insbes. Fig. 1 und 8) eines Fahrzeuges befestigbar. Andererseits sind an der Trägereinrichtung 2 Ladegut-Aufnahmemittel 6 befestigt. Somit dient die Trägereinrichtung 6 zur verstellbaren Halterung der Aufnahmemittel 6 innerhalb des Laderaums 4. Dazu ist erfindungsgemäß die Trägereinrichtung 2 aus einer etwa parallel zu einem Laderaumboden 8 liegenden Gebrauchsposition - in Fig. 1 mit A bezeichnet - nach Entfernen und/oder flachem Zusammenlegen der Ladegut-Aufnahmemittel 6 um eine in der Nähe des Laderaumbodens 8 zu diesem etwa parallel verlaufende Schwenkachse Y in eine Nichtgebrauchsposition B verschwenkbar, in der die Trägereinrichtung 2 praktisch vollständig und ggf. zusammen mit dem flach gelegten Aufnahmemitteln 6 etwa parallel zu sowie in der Nähe einer den Laderaum 4 begrenzenden Fahrzeugwandung (Schottwandung) 10 liegt. Dadurch wird praktisch der gesamte Laderaumboden 8 freigegeben.

Vorzugsweise verläuft die Schwenkachse Y rechtwinklig zu einer Fahrzeug-Längsachse X, wobei die Fahrzeugwandung 10 den Laderaum 4 von einem Fahrgastraum trennt und somit einer Laderaumöffnung 12 gegenüberliegt (s. insbes. Fig. 1). Da heute bei den meisten Fahrzeugen der Laderaum 4 im Heckbereich vorgesehen ist, handelt es sich somit bei der Fahrzeugwandung 10 um eine vordere, in Fahrtrichtung weisende Begrenzung des Laderaumes 4.

Wie sich weiterhin aus Fig. 1 ergibt, ist erfindungsgemäß vorgesehen, dass die Ladegut-Aufhahmemittel 6 über die erfindungsgemäße Trägereinrichtung 2 aus der Gebrauchsposition A auch von der Fahrzeugwandung 10 weg in Richtung zur Laderaumöffnung 12 hin in eine Ladeposition C bewegbar sind.

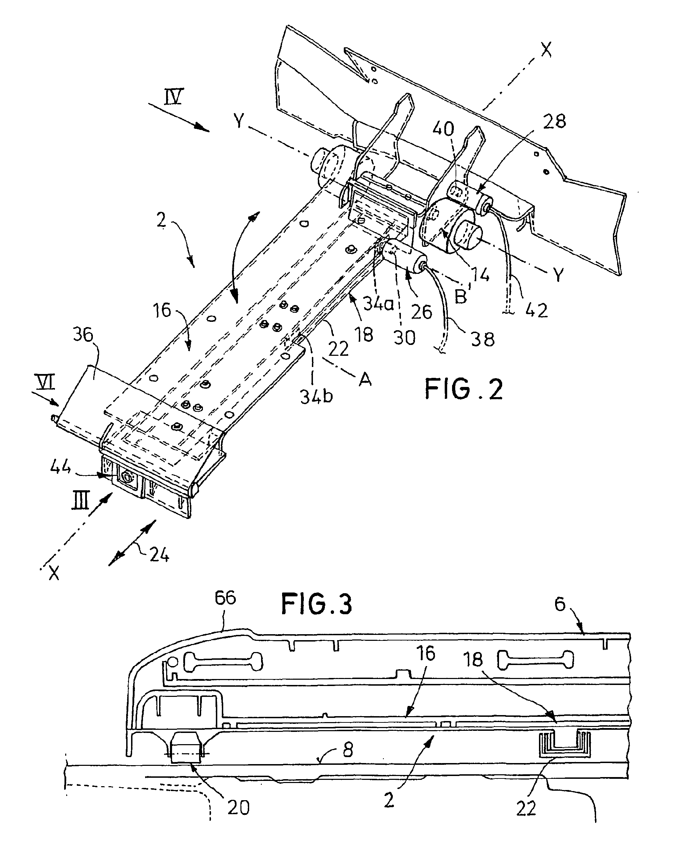

Wie sich nun weiterhin, insbes. aus Fig. 2 bis 5, ergibt, besteht die Trägereinrichtung 2 im wesentlichen aus einem im Laderaum 4 befestigbaren Schwenkgelenk 14 sowie aus Haltemitteln 16 zur insbesondere lösbaren Befestigungsverbindung mit den Ladegut-Aufnahmemitteln 6. Dabei sind die Haltemittel 16 mit dem Schwenkgelenk 14 über eine Schiebeführung 18 verbunden. Die Haltemittel 16 können bevorzugt in Form einer Basisplatte ausgebildet sein. Die Haltemittel 16 weisen dabei auf ihrer Unterseite Tragrollen 20 zur verschiebbaren bzw. abrollenden Abstützung auf dem Laderaumboden 8 auf (s. Fig. 3). Vorzugsweise sind mindestens vier Tragrollen 20 jeweils in den Eckbereichen der Unterseite der als Haltemittel 16 eingesetzten Basisplatte angeordnet.

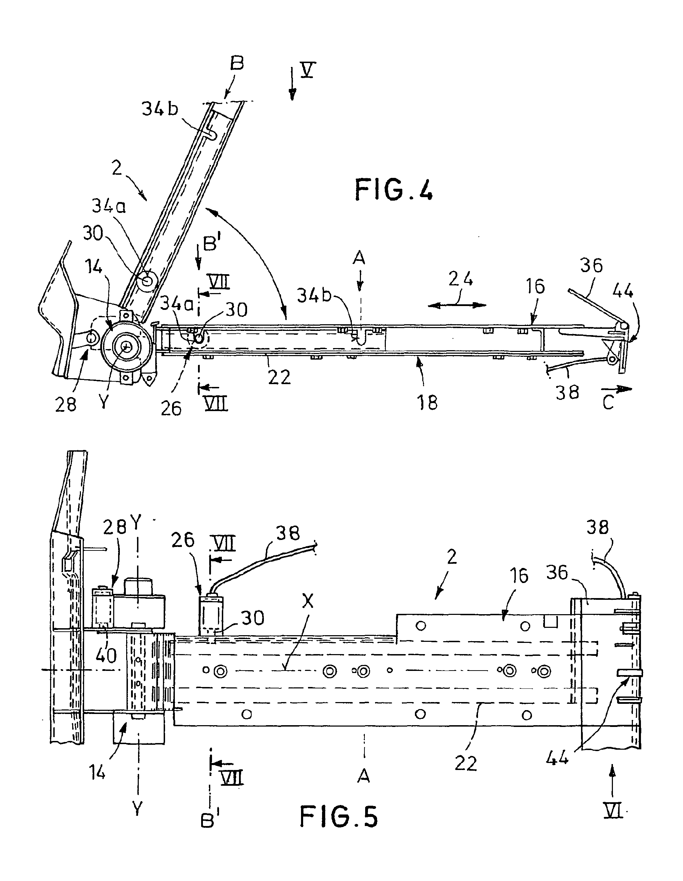

Gemäß Fig. 3 und 4 besteht die Schiebeführung 18 aus mindestens einer, im dargestellten Beispiel genau einer mittig angeordneten, Teleskopschienenführung 22. Solche Teleskopschienenführungen werden in ähnlicher Ausführung z.B. als Schubfach-Führung in der Möbelindustrie verwendet. Die Teleskopschienenführung 22 besteht somit aus teleskopisch ineinandergreifenden Schienenelementen, die eine Bewegung der Haltemittel 16 und der damit verbundenen Aufnahmemittel 6 in Richtung der Bewegungsachse X ermöglichen. Dies ist in Fig. 1, 2 und 4 jeweils durch einen Doppelpfeil 24 angedeutet.

Alternativ zu der dargestellten, bevorzugten Ausführungsform kann die Schiebeführung 18 auch durch andere Mittel, beispielsweise durch ein Scherenhebelgetriebe, gebildet sein.

Erfindungsgemäß sind weiterhin Verriegelungsmittel zum lösbaren Verriegeln der Trägereinrichtung 2 in jeder ihrer möglichen Positionen A, B und C vorgesehen. Es handelt sich einerseits um eine Schienenverriegelung 26, mit der im Bereich der Teleskopschienenführung 22 das System wahlweise in der Gebrauchsposition A oder in einer Relativstellung B' zum Verschwenken in die Nichtgebrauchsposition B verriegelbar ist. Andererseits ist im Bereich des Schwenkgelenkes 14 eine Schwenkverriegelung 28 vorgesehen, mit der die Trägereinrichtung 2 in der hochgeklappten Nichtgebrauchsposition B verriegelt wird (s. insbes. Fig. 4).

Wie sich aus Fig. 2 und Fig. 4 bis 7 ergibt, weist die Schienenverriegelung 26 ein Riegelelement 30 auf (Fig. 7), das an einem (22a) der teleskopartig ineinander greifenden Schienenelemente über Haltemittel 32 befestigt ist und in jeder der beiden Positionen A oder B', vorzugsweise durch Federkraft, in eine Riegelöffnung 34a (Pos. B') oder 34b (Pos. A) quer zur Bewegungsrichtung X eingreift (s. auch Fig. 4). Zum Lösen dieser Schienenverriegelung 26 ist am freien, dem Schwenkgelenk 14 gegenüberliegenden Ende der Schiebeführung 18 eine Lösetaste 36 angeordnet, die über ein Bewegungsübertragungselement, bevorzugt einen Bowdenzug 38, auf das Riegelelement 30 wirkt, um es gegen die Federkraft aus der jeweiligen Riegelöffnung 34a oder b herauszubewegen und so die Schiebeführung 18 verstellen zu können.

Auch die Schwenkverriegelung 28 weist ein Riegelelement 40 auf (Fig. 2 und 5), welches im dargestellten Beispiel parallel zur Schwenkachse Y wirkt. Es ist aber auch eine radial wirkende Ausführung möglich (senkrecht zur Schwenkachse Y). Das Riegelelement 40 ist bevorzugt durch einen separaten Handhebel lösbar; dieser - in der Zeichnung nicht dargestellte - Handhebel kann an einer gut zugänglichen Stelle, insbesondere im Öffnungsbereich des Laderaumes 4, angeordnet sein. Auch hier erfolgt die Betätigung vorzugsweise über einen Bowdenzug 42 (Fig. 2). Hierbei ist es besonders vorteilhaft, den Handhebel derart anzuordnen und auszulegen, dass er gleichzeitig auch eine optische Anzeigefunktion für die ordnungsgemäße Verriegelung der Schwenkverriegelung 28 erfüllt. Wird beim Hochklappen die Verriegelungsstellung (Pos. B) nicht ganz erreicht, so rastet das Riegelelement 40 noch nicht ein. Der Handhebel steht dann noch in einer bestimmten Stellung , die dem Benutzer anzeigt, dass noch nicht verriegelt ist. Erst beim Einrasten des Riegelelementes 40 bewegt sich der Handhebel in eine Stellung, die das Verriegeln erkennen läßt.

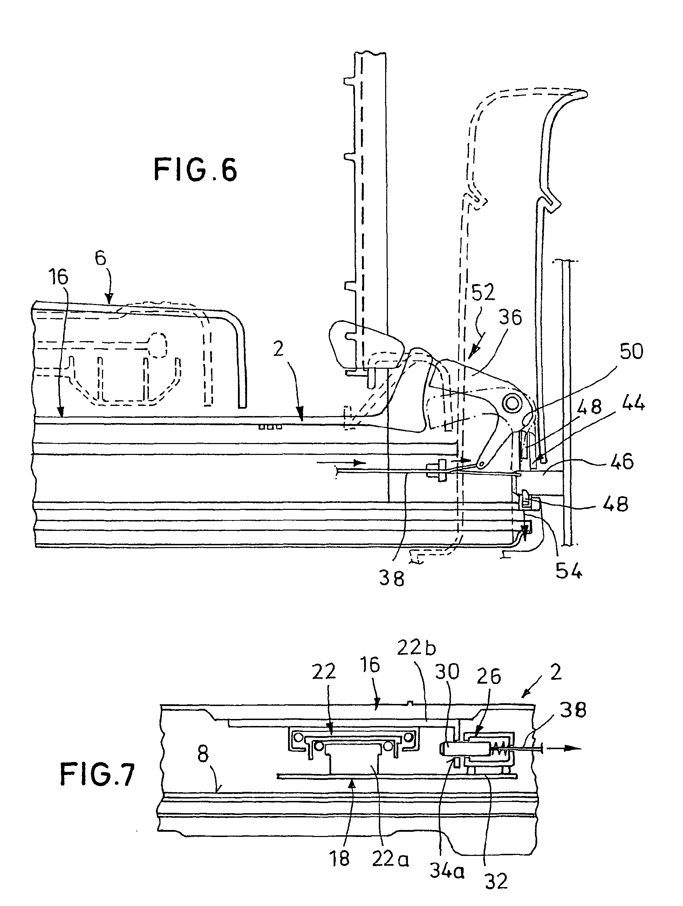

In weiterer vorteilhafter Ausgestaltung der Erfindung ist eine Endverriegelung 44 vorgesehen (s. insbes. Fig. 6), die am freien Ende der Teleskopschienenführung 22 im Bereich der Lösetaste 36 angeordnet ist und mit einem im Laderaum 4 fest angebrachten Riegelelement 46 zusammenwirkt, um die Teleskopschienenführung 22 in der Ladeposition C zu verriegeln. Diese Verriegelung wirkt einerseits in Fahrtrichtung der Fahrzeuglängsachse X, andererseits vorteilhafterweise auch in Richtung der Querachse Y, wodurch eine hohe Fahrtsicherheit durch gute Ladungsfixierung erreicht wird. Im Endbereich der Teleskopschienenführung 22 ist ein Riegelschieber 48, z.B. vertikal, geführt, in den das Riegelelement 46 eingreift (s. Fig. 6). Vorzugsweise ist der Riegelschieber 48 ebenfalls durch die Lösetaste 36 zum Lösen dieser Endverriegelung 44 betätigbar. Folglich hat in dieser bevorzugten Ausführung die Lösetaste 36 vorteilhafterweise eine Doppelfunktion; sie dient zum Entriegeln der Endverriegelung 44 und auch zum Entriegeln der Schienenverriegelung 26. Die Betätigung des Riegelschiebers 48 erfolgt über einen Exzenterabschnitt 50 der Lösetaste 36. Dadurch wird beim Druckbetätigen der Lösetaste 36 in Pfeilrichtung 52 der Riegelschieber 48 in Pfeilrichtung 54 zwecks Freigabe des Riegelelementes 46 bewegt (gegen die Kraft einer Rückstellfeder).
Im Zusammenhang mit der Schwenkverriegelung 28 ist es weiterhin vorteilhaft, wenn eine Dämpfervorrichtung (nicht dargestellt) derart vorgesehen ist, dass die Trägereinrichtung 2 aus ihrer hochgeschwenkten, verriegelten Nichtgebrauchsposition B nach dem Entriegeln der Schwenkverriegelung 28 schwerkraftbedingt, jedoch gebremst langsam in Richtung des Laderaumbodens 8 nach unten schwenkt. Dabei kann mit Vorteil in der unteren Stellung noch ein geringer vertikaler Abstand als Griffspalt zum Untergreifen zwecks Verschiebung in Richtung der Ladeposition C verbleiben. Dieser geringfügige vertikale Abstand wird beim Beladen der Ladegut-Aufnahmemittel 6 dann beseitigt.

Es ist weiterhin zweckmäßig, zur schnellen, vorzugsweise werkzeugfreien und lösbaren Befestigung der Ladegut-Aufnahmemittel 6 an den Haltemitteln 16 der Trägereinrichtung 2 geeignete Schnellkupplungsmittel vorzusehen. Diese werden im folgenden nicht näher beschrieben.

Im dargestellten Ausführungsbeispiel sind die Ladegut-Aufnahmemittel 6 als klappboxartiger Aufnahmebehälter 56 ausgebildet, der aus flach zusammenlegbaren Behälterteilen besteht. Gem. Fig. 8, die den aufgestellten, aufnahmebereiten Zustand des Aufnahmebehälters 56 in der Ladeposition C der Trägereinrichtung 2 zeigt, besteht der Aufnahmebehälter 56 aus klappbar miteinander verbundenen Wandungsteilen 58, 60, 62 und 64 und einem Deckelteil 66, welches in der aufgestellten Position gem. Fig. 8 ebenfalls ein Wandungsteil bildet. Das Deckelteil 66 ist über zwei seitliche Wandungsteile 58 und 60 mit dem vorderen Wandungsteil 62 derart gelenkig verbunden, dass durch eine parallelogrammartige Aufklappbewegung die Wandungsteile aus ihrer flach aufeinander und auf der Innenseite des Deckelteils 66 liegenden Lage in einen mindestens ein Aufnahmefach 68 bildenden Zustand überführbar sind (sowie umgekehrt). In der zusammengelegten Lage wird somit eine Art Etui gebildet, indem im geschlossenen Nichtgebrauchszustand die jeweiligen Wandungsteile vom Deckelteil 66 überdeckt werden (vgl. dazu auch Fig. 3). Durch mindestens eine Trennwandung 64 können unterteilte Aufnahmefächer 68 gebildet werden. Weiterhin ist ein Handhabungsgriff 70 vorgesehen, der vorzugsweise an dem vorderen Wandungsteil 62 derart befestigt ist, dass er im Nichtgebrauchszustand im Bereich einer passend ausgebildeten Ausnehmung 72 des Deckelteils 66 liegt. Durch diese vorteilhafte Ausgestaltung ist eine Einhandbedienung in komfortabler Weise möglich, indem der Handhabungsgriff 70 einerseits zum Aufstellen des Deckelteils 66 sowie andererseits auch für die parallelogrammartige Aufstellbewegung der Wandungsteile verwendet werden kann.

Bevorzugt sind noch mehrere Hakenelemente 74, insbesondere auf der Innenseite des Deckelteils 66, angeordnet, so dass Gegenstände, beispielsweise Einkaufstüten, auch durch Aufhängen fixierbar sind.

In Abweichung von der bevorzugten Ausführung können auch beliebige andere Arten von Ladegut-Aufnahmemitteln 6 vorgesehen werden, beispielsweise Halterungen für Getränkekästen oder an sonstige Gegenstände angepaßte Halteeinrichtungen.

Die erfindungsgemäße Trägereinrichtung 2 bildet eine Art "Plattformsystem", indem sie zur verstellbaren Befestigung verschiedenartiger Ladegut-Aufnahmemittel 6 innerhalb von Laderäumen 4 praktisch beliebiger Fahrzeuge konzipiert werden kann. Dazu sind lediglich jeweils spezielle Adapterteile zur fahrzeugspezifisch angepaßten Befestigung der Trägereinrichtung 2 und ihrer weiteren zugehörigen Funktionsteile (insbesondere des Riegelelementes 46) innerhalb des jeweiligen Fahrzeugs vorzusehen. Dabei sind die Haltemittel 16 jeweils an das einzusetzende Ladegut-Aufnahmemittel 6 anzupassen.

## Patentansprüche

1. System zur Unterbringung von Ladegut innerhalb eines Fahrzeugs, mit einer in einem Laderaum (4) des Fahrzeugs befestigten bzw. befestigbaren Trägereinrichtung (2) für Ladegut-Aufnahmemittel (6), wobei die Trägereinrichtung (2) aus einer auf einem Laderaumboden (8) liegenden Gebrauchsposition (A) nach Entfernen und/oder flachem Zusammenlegen der Ladegut-Aufnahmemittel (6) um eine in der Nähe des Laderaumbodens (8) zu diesem etwa parallel verlaufende Schwenkachse (Y) in eine etwa parallel zu und in der Nähe einer den Laderaum (4) begrenzenden Fahrzeugwandung (10) liegende und **dadurch** den Laderaumboden (8) freigebende Nichtgebrauchsposition (B) verschwenkbar ist, **dadurch gekennzeichnet, dass** die Ladegut-Aufnahmemittel (6) an der Trägereinrichtung (2) befestigt sind und die Trägereinrichtung (2) derart ausgebildet ist, dass die Ladegut-Aufnahmemittel (6) aus der Gebrauchsposition (A), in der sie in einem für Ladung aufnahmebereiten Zustand nahe der Fahrzeugwandung (10) stehen, von der Fahrzeugwandung (10) weg in Richtung zur Laderaumöffnung (12) in eine Ladeposition (C) bewegbar sind.

2. System nach Anspruch 1, **dadurch gekennzeichnet, dass** die Trägereinrichtung (2) derart ausgebildet und innerhalb des Laderaums (4) anzuordnen ist, dass die Schwenkachse (Y) quer zu einer Fahrzeug-Längsachse (X) und in der Nähe einer den Laderaum (4) von einem Fahrgastraum trennenden und einer Laderaumöffnung gegenüberliegenden Fahrzeugwandung (10) verläuft.

3. System nach einem der Ansprüche 1 oder 2, **dadurch gekennzeichnet, dass** die Trägereinrichtung (2) ein im Laderaum (4) befestigbares Schwenkgelenk (14) sowie Haltemittel (16) zur insbesondere lösbaren Befesögungsverbindung mit den Ladegut-Aufnahmemitteln (6) aufweist, wobei die Haltemittel (16) mit dem Schwenkgelenk (14) Ober eine Schiebeführung (18) verbunden sind.

4. System nach Anspruch 3, **dadurch gekennzeichnet, dass** die - bevorzugt in Form einer Basisplatte ausgebildeten - Haltemittel (16) Tragrollen (20) zur verschiebbaren Abstützung auf dem Laderaumboden (8) aufweist.

5. System nach Anspruch 3 oder 4, **dadurch gekennzeichnet, dass** die Schiebeführung (18) aus mindestens einer Teleskopschienenführung (22) besteht.

6. System nach Anspruch 3 oder 4, **dadurch gekennzeichnet, dass** die Schiebeführung (18) von einem Scherenhebelgetriebe gebildet ist.

7. System nach einem der Ansprüche 1 bis 6, **gekennzeichnet durch** Verriegelungsmittel (26, 28, 44) zum lösbaren Verriegeln der Trägereinrichtung (2) in vorzugsweise jeder ihrer möglichen Positionen (A, B, C).

8. System nach einem der Ansprüche 1 bis 7, **gekennzeichnet durch** eine Dämpfervorrichtung derart, dass die Trägereinrichtung (2) aus ihrer hochgeschwenkten, verriegelten Nichtgebrauchsposition (B) nach Entriegeln von zugehörigen Verriegelungsmitteln (28) schwerkraftbedingt, aber gebremst langsam in Richtung des Laderaumbodens (8) nach unten schwenkt.

9. System nach den Ansprüchen 1 bis 8, **gekennzeichnet durch** Schnellkupplungsmittel zur lösbaren Befestigung der Ladegut-Aufnahmemittel (6) an der Trägereinrichtung (2).

10. System nach einem der Ansprüche 1 bis 9, **dadurch gekennzeichnet, dass** die Ladegut-Aufnahmemittel (6) als klappboxartiger Aufnahmebehälter (56) ausgebildet sind, der aus flach zusammenlegbaren Behälterteilen besteht.

11. System nach einem der Ansprüche 1 bis 10, **gekennzeichnet durch** Adapterteile zur fahrzeugspezifisch angepassten Befestigung der Trägereinrichtung (2) und weiterer zugehöriger Funktionsteile innerhalb des Laderaums (4) des jeweiligen Fahrzeugs.

## Claims

1. System for storing a load within a vehicle, having a carrier device (2) for load-receiving means (6), which carrier device is fastened or fastenable in a loading space (4) of the vehicle, wherein the carrier device (2), following the removal or flat-collapsing of the load-receiving means (6), can be pivoted out of a usage position (A), which lies on a loading space floor (8), about a swivel axis (Y) running close to the loading space floor (8) roughly parallel thereto, into a non-usage position (B), which lies roughly parallel and close to a vehicle wall (10) limiting the loading space (4) and thereby frees the loading space floor (8), **characterized in that** the load-receiving means (6) are attached to the carrier device (2) and the carrier device (2) is configured such that the load-receiving means (6) can be moved out of the usage position (A), in which they stand close to the vehicle wall (10) in a load-receptive state, away from the vehicle wall (10), in the direction of the loading space opening (12), into a loading position (C).

2. System according to Claim 1, **characterized in that** the carrier device (2) is configured and shall be arranged within the loading space (4) such that the swivel axis (Y) runs transversely to a vehicle longitudinal axis (X) and close to a vehicle wall (10) which separates the loading space (4) from a passenger compartment and lies opposite a loading space opening.

3. System according to one of Claims 1 or 2, **characterized in that** the carrier device (2) has a swivel joint (14), which can be fastened in the loading space (4), and holding means (16) for the, in particular, releasable fastening connection to the load-receiving means (6), the holding means (16) being connected to the swivel joint (14) by a sliding guide (18).

4. System according to Claim 3, **characterized in that** the holding means (16) - preferably configured in the form of a base plate - have supporting rollers (20) for displaceable support on the loading space floor (8).

5. System according to Claim 3 or 4, **characterized in that** the sliding guide (18) comprises at least one telescopic rail guide (22).

6. System according to Claim 3 or 4, **characterized in that** the sliding guide (18) is formed by a scissors lever mechanism.

7. System according to one of Claims 1 to 6, **characterized by** locking means (26, 28, 44) for the releasable locking of the carrier device (2) in preferably each of its possible positions (A, B, C).

8. System according to one of Claims 1 to 7, **characterized by** a damper apparatus such that the carrier device (2), following the unlocking of associated locking means (28), swivels out of its uptilted, locked non-usage position (B), under the action of gravitational force, yet with braked momentum, slowly downwards in the direction of the loading space floor (8).

9. System according to one of Claims 1 to 8, **characterized by** rapid-action coupling means for the releasable fastening of the load-receiving means (6) to the carrier device (2).

10. System according to one of Claims 1 to 9, **characterized in that** the load-receiving means (6) are configured as a folding-box-like container (56), comprising flatly collapsible container parts.

11. System according to one of Claims 1 to 10, **characterized by** adapter parts for the vehicle-tailored fastening of the carrier device (2) and of further associated functional parts within the loading space (4) of the respective vehicle.

## Revendications

1. Système pour placer un chargement à l'intérieur d'un véhicule, lequel système présente un dispositif de support (2) de moyens (6) de reprise du chargement, qui est fixé ou peut être fixé dans le coffre (4) du véhicule, le dispositif de support (2) pouvant pivoter depuis une position d'utilisation (A) située sur le plancher (8) du coffre après que l'on a enlevé et/ou rabattu à plat les moyens (6) de reprise du chargement autour d'un axe de pivotement (Y) situé à proximité du plancher (8) du coffre et s'étendant sensiblement en parallèle à ce dernier, jusque dans une position (B) de non-utilisation (B) sensiblement parallèle à une paroi (10) du véhicule qui délimite le coffre (4) et proche de cette paroi, pour ainsi libérer le plancher (8) du coffre, **caractérisé en ce que** les moyens (6) de reprise du chargement sont fixés sur le dispositif de support (2) et **en ce que** le dispositif de support (2) est configuré de telle sorte que les moyens (6) de reprise du chargement peuvent être déplacés depuis la position d'utilisation (A) dans laquelle ils sont placés à proximité de la paroi (10) du véhicule dans une position prête à reprendre le chargement, jusque dans une position de chargement (C) éloignée de la paroi (10) du véhicule en direction de l'ouverture (12) du coffre.

2. Système selon la revendication 1, **caractérisé en ce que** le dispositif de support (2) est configuré et disposé à l'intérieur du coffre (4) de telle sorte que, l'axe de pivotement (Y) s'étend transversalement par rapport à l'axe longitudinal (X) du véhicule et à proximité d'une paroi (10) du véhicule qui sépare le coffre (4) de l'habitacle et opposée à l'ouverture du coffre.

3. Système selon l'une des revendications 1 ou 2, **caractérisé en ce que** le dispositif de support (2) présente une articulation pivotante (14) qui peut être fixée dans le coffre (4) ainsi que des moyens de maintien (16) qui permettent en particulier une fixation libérable aux moyens (6) de reprise du chargement, les moyens de maintien (16) étant reliés à l'articulation pivotante (14) par un guide coulissant (18).

4. Système selon la revendication 3, **caractérisé en ce que** les moyens de maintien (16), de préférence configurés sous la forme d'une plaque de base, présentent des galets de support (20) qui permettent un appui déplaçable sur le plancher (8) du coffre.

5. Système selon les revendications 3 ou 4, **caractérisé en ce que** le guide coulissant (18) est constitué d'au moins un guide (22) à rail télescopique.

6. Système selon les revendications 3 ou 4, **caractérisé en ce que** le guide coulissant (18) est formé par une transmission pantographique.

7. Système selon l'une des revendications 1 à 6, **caractérisé par** des moyens de verrouillage (26, 28, 44) qui permettent de verrouiller de manière libérable le dispositif de support (2) de préférence dans chacune des positions (A, B, C) qu'il peut prendre.

8. Système selon l'une des revendications 1 à 7, **caractérisé par** un dispositif d'amortissement configuré de telle sorte que le dispositif de support (2) pivote lentement en direction du plancher (8) du coffre sous l'action de la gravité mais de manière freinée depuis sa position (B) de non-utilisation verrouillée et rabattue vers le haut, après déverrouillage de moyens (28) associés de verrouillage.

9. Système selon les revendications 1 à 8, **caractérisé par** des moyens d'accouplement rapide qui permettent de fixer de manière libérable les moyens (6) de reprise du chargement sur le dispositif de support (2).

10. Système selon l'une des revendications 1 à 9, **caractérisé en ce que** les moyens (6) de reprise du chargement sont configurés comme récipients (56) de reprise en forme de boîtes rabattables constituées de parties planes de récipient qui peuvent être rabattues les unes sur les autres.

11. Système selon l'une des revendications 1 à 10, **caractérisé par** des pièces d'adaptation qui permettent de fixer d'une manière adaptée spécifiquement au véhicule le dispositif de support (2) et d'autres pièces fonctionnelles associées à l'intérieur du coffre (4) du véhicule concerné.
